# EUROPÄISCHE PATENTSCHRIFT

(11) **EP 1 685 761 B1**
(45) Veröffentlichungstag und Bekanntmachung des Hinweises auf die Patenterteilung: **16.01.2008**
(21) Anmeldenummer: 05024486.2
(22) Anmeldetag: 10.11.2005
(51) Int. Cl.: A01G 23/00, B66C 1/34, F16G 11/14

(54) **Vorrichtung zum Aufhängen eines Stammes**
Device for hanging a log
Dispositif pour suspendre un tronc d'arbre

(30) Priorität: 01.02.2005 DE 102005004399
(43) Veröffentlichungstag der Anmeldung: 02.08.2006
(73) Patentinhaber: Giritzer, Ludwig, 83471 Berchtesgaden-Engedey (DE)
(72) Erfinder: Giritzer, Ludwig, 83471 Berchtesgaden-Engedey (DE)
(74) Vertreter: Haft, von Puttkamer, Berngruber

(56) Entgegenhaltungen:
- AT-B- 409 915
- US-A- 4 358 144
- US-A- 4 417 758
- US-A- 4 709 952
- US-A- 5 064 235

## Beschreibung

Die Erfindung bezieht sich auf eine Vorrichtung zum Aufhängen eines Stammes oder dergleichen länglichen Gegenstandes, nach dem Oberbegriff des Anspruchs 1.

Eine solche Vorrichtung wird auch als Choker oder Chokergleiter bezeichnet. Ein Chokergleiter wird insbesondere zum Transport von Baumstämmen mit einem Seilbahnkran von einem Berg in das Tal verwendet. Das zwischen Berg und Tal gespannte Tragseil bildet die Laufbahn für eine Laufkatze, die durch ein Fahrseil verschoben wird. An der Laufkatze ist z.B. ein 2 m langes Seil befestigt, das durch die Gleitöse am Einhängekörper des Chokers gesteckt und dann um den Baumstamm geschlungen wird. Durch Befestigung des Seilendes an dem Einhängekörper wird eine Schlinge gebildet, die sich um den Baumstamm fest zusammenzieht, wenn er an der Laufkatze hängt. Zur Befestigung des Seilendes an dem Einhängekörper weist das Seilende einen Knopf z.B. aus Stahl auf. Der Einhängekörper ist mit einer Längsöffnung versehen, die am oberen Ende eine Erweiterung aufweist. Der Knopf wird von außen durch die Erweiterung und der dem Knopf benachbarte Seilabschnitt durch die Längsöffnung in den Einhängekörper eingeführt.

Das Seil wird dann nach unten gezogen, wodurch der Knopf im Inneren des Einhängekörpers unterhalb der Erweiterung in Höhe der schmalen Längsöffnung auf einer Schulter oder dergleichen aufliegt, so dass er nicht mehr seitlich herausrutschen kann, wenn auf das Seil ein Zug nach unten ausgeübt wird. Der Baumstamm ist damit zum Transport mit dem Seilbahnkran ins Tal sicher fixiert.

Dort wird er auf einem Baumstammhaufen abgeladen. Um die Schlinge zu öffnen, muss eine Person auf den Haufen steigen und den Knopf an dem Seilende aus dem Einhängekörper ziehen. Diese Tätigkeit ist anstrengend, zeitaufwändig und gefährlich.

Um diese Tätigkeit nicht mehr durchführen zu müssen, ist bereits ein Chokergleiter bekannt, bei dem das Seilende mit dem Knopf zwischen zwei scherenartig bewegbaren Backen fixiert wird, die mit einer Fernsteuerung geöffnet werden können, wenn der Baumstamm im Tal abgeladen wird (US-A-4 709 952).

Da die Reichweite der Fernsteuerung begrenzt ist, hat der bekannte ferngesteuerte Chokergleiter den Nachteil, dass, wenn die Backen am Berg geschlossen worden sind, sie nur mit Spezialwerkzeug wieder aufwändig geöffnet werden können, z.B. wenn der Baumstamm fehlerhaft aufgehängt worden ist. D.h., das Seilende mit dem Knopf kann nicht einfach wieder aus dem Einhängekörper gezogen werden, wie dies bei dem eingangs geschilderten, herkömmlichen Chokergleiter der Fall ist.

Aus AT-B-409 915 ist eine Vorrichtung nach dem Oberbegriff des Anspruchs 1 bekannt. Zum Verriegeln des Einhängekörpers wird ein Sperrhebel verwendet, der in Verriegelungsposition federbelastet ist. Um den Sperrhebel zu lösen, ist eine erhebliche Kraft und damit ein entsprechend groß dimensionierter Aktuator erforderlich. Der Einhängekörper ist als Klaue ausgebildet, die in die Freigabeposition geschwenkt werden muss, um das Seilende mit dem Knopf aushängen zu können. Um die Schlinge am Berg öffnen zu können, muss daher ebenfalls ein Werkzeug, und zwar ein Dorn, durch eine Gehäuseöffnung eingeführt und gegen den Sperrhebel gedrückt werden, um ihn in die Entriegelungsstellung zu verschwenken.

Aufgabe der Erfindung ist es, eine Vorrichtung mit einem klein dimensionierten Aktuator bereitzustellen, die ein Öffnen der Schlinge ohne Werkzeug auch dann erlaubt, wenn keine Fernsteuerung zur Verfügung steht.

Dies wird erfindungsgemäß mit der im Anspruch 1 gekennzeichneten Vorrichtung erreicht. In den Unteransprüchen sind vorteilhafte Ausgestaltungen der erfindungsgemäßen Vorrichtung wiedergegeben.

Die erfindungsgemäße Vorrichtung weist einen Gelenkkopf auf, an dem ein Einhängekörper zwischen einer Schließposition im Gelenkkopf und einer aus dem Gelenkkopf geschwenkten Freigabeposition um eine Schwenkachse verschwenkbar gelenkt ist. Der Einhängekörper ist mit einer Längsöffnung zum Einhängen eines Knopfes an einem Ende des Zugmittels versehen. In der aus dem Gelenkkopf geschwenkten Freigabeposition wird das Zugmittelende mit dem Knopf freigegeben. Der Gelenkkopf weist eine Gleitöse auf, durch die das Zugmittel gleitend geführt ist, um eine sich um den hängenden Stamm zusammenziehende Schlinge zu bilden. Um den Einhängekörper in der Schließposition zu verriegeln, ist eine Verriegelungsvorrichtung vorgesehen. Um den Einhängekörper zu entriegeln und damit in die Freigabeposition zu verschwenken, wird die Verriegelungseinrichtung mit einem Aktuator betätigt, der von einer Fernsteuerung angesteuert wird.

Die Längsöffnung des Einhängekörpers weist an ihrem von der Schwenkachse abgewandten Ende eine Erweiterung auf. Ferner ist unterhalb der Erweiterung eine Auflage für den eingehängten Knopf vorgesehen. Damit kann das Zugmittelende mit dem Knopf auch in der Schließposition des Einhängekörpers einaber auch ausgehängt werden, um die Schlinge zu öffnen. Damit ist ein problemloses manuelles Öffnen der Schlinge auch ohne Fernsteuerung möglich, z.B. oben am Berg.

Wenn hingegen der Baumstamm mit dem Seilbahnkran ins Tal transportiert worden ist, um auf dem Baumstammhaufen abgeladen zu werden, kann der erfindungsgemäße Chokergleiter ferngesteuert geöffnet werden, so dass das anstrengende, zeitaufwändige und gefährliche manuelle Öffnen der Schlinge auf dem Baumstammhaufen entfällt.

Die Fernsteuerung erfolgt vorzugsweise durch Funk. Jedoch ist auch jede andere Fernsteuerung, beispielsweise eine Infrarot-Fernsteuerung, möglich.

Die erfindungsgemäße Vorrichtung ist zwar in erster Linie für einen Seilbahnkran bestimmt. Es versteht sich jedoch, dass sie auch bei anderen Transportmitteln verwendbar ist, bei denen Stämme hängend transportiert werden. Auch ist die erfindungsgemäße Vorrichtung in erster Linie für Baumstämme bestimmt, jedoch auch für anderes stammförmiges Material, wie Balken oder Masten, auch aus anderen Materialien als Holz, verwendbar. Auch brauchen die Stämme nicht freischwebend transportiert zu werden; sie können auch angehängt sein.

Die Öse, durch die das Seil gleitend geführt ist, ist erfindungsgemäß fest mit dem Gelenkkopf verbunden, vorzugsweise einstückig, beispielsweise daran angeschweißt. Es ist jedoch auch möglich, die Gleitöse in anderer Weise mit dem Gelenkkopf zu verbinden.

Der Gelenkkopf besteht vorzugsweise aus zwei Teilen, die lösbar miteinander verbindbar sind, wobei der Einhängekörper an dem einen, unteren Gelenkkopfteil angelenkt ist, während die Gleitöse an dem anderen, oberen Gelenkkopfteil befestigt sein kann. Vorzugsweise bilden die beiden Gelenkkopfteile ein Gehäuse, das die Verriegelungseinrichtung und alle Komponenten zur Betätigung der Verriegelungseinrichtung aufnimmt, also insbesondere den Empfänger der Fernsteuerung, den Aktuator zur Betätigung der Verriegelungseinrichtung und die Energieversorgung für den Empfänger und den Aktuator. Der Aktuator kann z.B. ein Elektromagnet sein. Vorzugsweise wird er jedoch durch einen Elektromotor gebildet.

Die Verriegelungseinrichtung und die Komponenten zur Betätigung derselben sind dazu vorzugsweise auf einer Montageplatte auf dem unteren Gelenkkopfteil mit dem Einhängekörper angeordnet. Zum verschenkbaren Anlenken des Einhängekörpers ist der untere Gelenkkopfteil vorzugsweise als Gabel ausgebildet.

Das andere, obere Gelenkkopfteil ist als über die Montageplatte stülpbare Haube oder Glocke ausgebildet und deckt damit die Verriegelungseinrichtung und die Komponenten zur Betätigung desselben ab. Zum Verbinden der beiden Gelenkkopfteile sind diese vorzugsweise miteinander verschraubbar ausgebildet, wobei z.B. die Montageplatte am Umfang ein Außengewinde aufweisen und in der Haube oder Glocke ein damit verschraubbares Innengewinde vorgesehen sein kann. Statt eines Schraubverschlusses ist auch jeder andere Verschluss, insbesondere Drehverschluss möglich, um die beiden Gelenkkopfteile zu verbinden.

Das Zugmittel, das zum Aufhängen des Stammes oder dergleichen verwendet wird, ist vorzugsweise ein Seil. Es kann jedoch auch ein Band, eine Kette oder dergleichen sein. So ist die erfindungsgemäße Vorrichtung insbesondere für Rundschlingen geeignet.

Die Verriegelungseinrichtung der erfindungsgemäßen Vorrichtung weist einen Verriegelungsbolzen auf, der in eine Rastausnehmung an dem von der Schwenkachse abgewandten Ende des Einhängekörpers eingreift. Der Verriegelungsbolzen ist in die Entriegelungsstellung federbelastet und in der Verriegelungsstellung durch eine Klinke arretiert, an der der Aktuator angreift. Der Verriegelungsbolzen ist in einer Führung verschiebbar geführt, die vorzugsweise an dem unteren Gelenkkopfteil angeordnet ist, vorzugsweise auf der Montageplatte.

Nachstehend ist eine Ausführungsform der erfindungsgemäßen Vorrichtung anhand der Zeichnung beispielhaft näher erläutert. Darin zeigen jeweils schematisch:
- Figur 1: eine perspektivische Ansicht der Vorrichtung von vorne mit dem Einhängekörper in der Schließposition, wobei das obere Gelenkkopfteil mit der Gleitöse vom unteren Gelenkkopfteil abgeschraubt ist;
- Figur 2: eine der Figur 1 entsprechende Ansicht des unteren Gelenkkopfteiles, jedoch mit nach unten in die Freigabeposition verschwenktem Einhängekörper;
- Figur 3: eine Seitenansicht des unteren Gelenkkopfteiles mit dem Einhängekörper in der Schließposition; und
- Figur 4: eine Ansicht der Vorrichtung mit einer Rundschlinge als Zugmittel.

Danach besteht die Vorrichtung aus einem oberen Gelenkkopfteil 1 mit einer Gleitöse 2 und einem unteren Gelenkkopfteil 3. Das obere Gelenkkopfteil 1 weist ein gestrichelt dargestelltes Innengewinde 4 zum Aufschrauben auf ein Außengewinde 5 am unteren Gelenkkopfteil 3 auf.

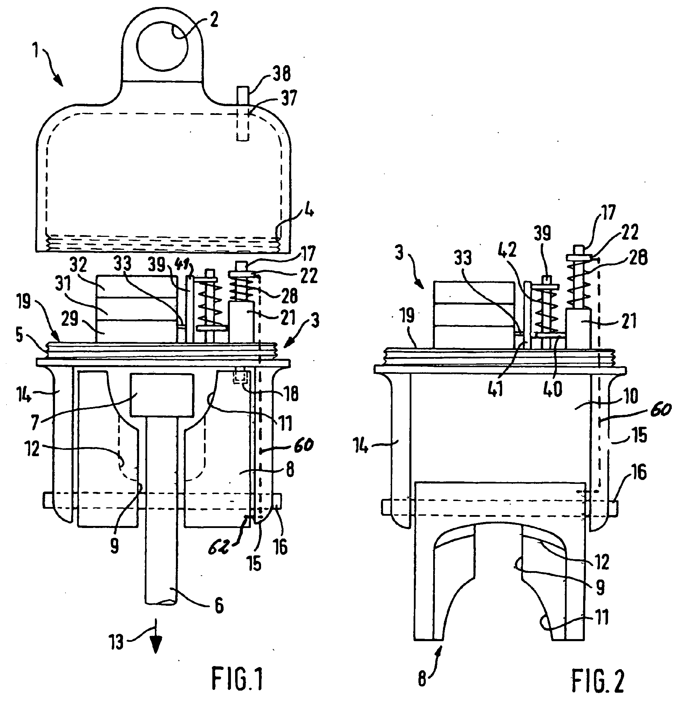

Zum Aufhängen eines nicht dargestellten Baumstamms wird ein Stahlseil verwendet, an dessen in Figur 1 dargestelltem Ende 6 ein Knopf 7, z.B. eine Stahlhülse, vorgesehen ist.

Das Seil 6 wird durch die Gleitöse 2 geführt und ist an der nicht dargestellten Laufkatze eines Seilbahnkranes befestigt. Das von der Laufkatze durch die Gleitöse 2 geführte Seilende 6 mit dem Knopf 7 wird um den zu transportierenden, nicht dargestellten Baumstamm gelegt, um eine Schlinge zu bilden, die sich um den Baumstamm zusammenzieht, wenn er aufgehängt wird.

Dazu wird das Seil 6 gemäß Figur 1 mit dem Knopf 7 in einen hülsenförmigen Einhängekörper 8 eingehängt, wenn sich dieser in der in Figur 1 dargestellten Schließposition befindet. Der Einhängekörper 8 weist an seiner Vorderseite eine Längsöffnung 9 auf, die am oberen Ende mit einer Erweiterung 11 versehen ist. Wie in Figur 1 dargestellt, kann damit der Knopf 7 und der benachbarte Seilabschnitt 6 durch die Erweiterung 11 und die Längsöffnung 9 in den hülsenförmigen Einhängekörper 8 von außen nach innen sowie von innen nach außen geschoben werden.

Der hülsenförmige Einhängekörper 8 ist innen unterhalb der Erweiterung 11 mit einer Innenschulter 12 versehen, die eine Auflage bildet, wenn der in den Einhängekörper 8 geschobene Seilabschnitt 6 mit dem Knopf 7 entsprechend dem Pfeil 13 nach unten gezogen wird. Damit ist der Knopf 7 hinter der Längsöffnung 9 sicher fixiert, wenn der Stamm in der Seilschlinge hängt.

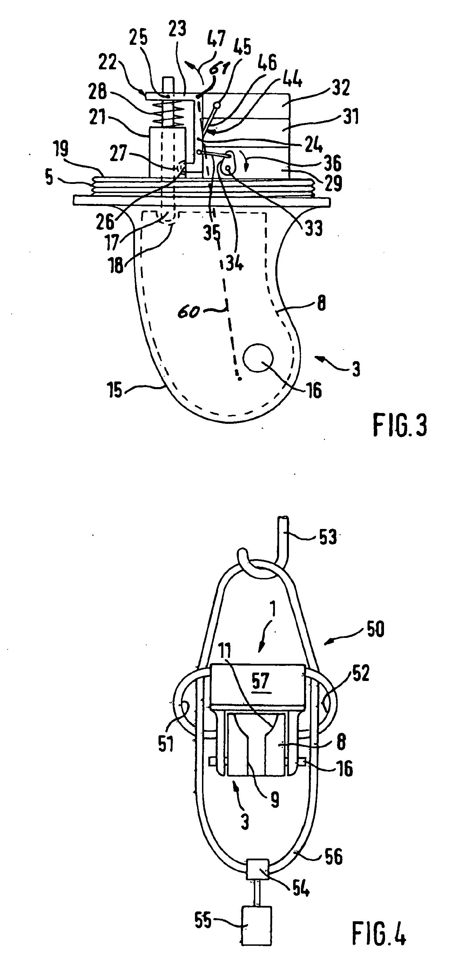

Der Einhängekörper 8 ist an dem unteren Gelenkkopfteil 3 zwischen der in Figur 1 und 3 dargestellten Schließposition und der in Figur 2 dargestellten Freigabeposition verschwenkbar angelenkt. Das untere Gelenkkopfteil 3 ist dazu als Gabel ausgebildet. Durch die beiden Wangen 14, 15 der Gabel und durch den Einhängekörper 8 erstreckt sich am unteren Ende eine Schwenkachse 16. Die beiden Wangen 14, 15 sind an der Rückseite durch einen Steg 10 oder dergleichen miteinander verbunden.

Der Einhängekörper 8 ist in der in Figur 1 und 3 dargestellten Schließposition durch eine Verriegelungseinrichtung verriegelbar, die mit einer Fernsteuerung betätigbar ist.

Zur Verriegelung ist ein Verriegelungsbolzen 17 vorgesehen, der von oben in eine in Figur 1 und 3 gestrichelt dargestellte Rastausnehmung 18 an der von der Schwenkachse 16 abgewandten Seite des Einhängekörpers 8 eingreift. Der Verriegelungsbolzen 17 durchsetzt dazu eine Montageplatte 19, die scheibenförmig ausgebildet und an ihrer Außenumfangswand mit dem Außengewinde 5 versehen ist.

Der Verriegelungsbolzen 17 wird in einer als Hülse 21 ausgebildeten Führung geführt, die auf der Montageplatte 19 angeordnet ist. Der Verriegelungsbolzen 17 ist in seine Entriegelungsstellung federbelastet und in seiner Verriegelungsstellung gemäß Figur 1 und 3 durch eine Klinke 22 arretierbar. Die Klinke 22 ist winkelförmig aus zwei Schenkeln 23 und 24 gebildet.

Der Schenkel 23 ist an dem oberen, aus der hülsenförmigen Führung 21 ragenden Ende des Verriegelungsbolzens 17 um eine Querachse 25 verschwenkbar angelenkt.

Zur Arretierung des Verriegelungsbolzens 17 in der Verriegelungsstellung gemäß Figur 1 und 3 weist die Klinke 22 an dem anderen Schenkel 24 einen Finger 26 auf, der in eine Rastausnehmung 27 in der hülsenförmigen Führung 21 eingreift.

Der Finger 26 ist in Eingriffsstellung in die Rastausnehmung 27 federbelastet. Zur Federbelastung des Verriegelungsbolzens 17 in die Entriegelungsstellung und zugleich zur Federbelastung des Fingers 26 in die Eingriffsstellung in die Rastausnehmung 27 dient eine Druckfeder 28, die sich einerseits an dem Schenkel 23 der Klinke 22 und andererseits an der Hülse 21 abstützt.

Durch die Montageplatte 19 und das damit verschraubbare als Glocke ausgebildete obere Gelenkkopfteil 1 wird ein Gehäuse gebildet, das sämtliche Teile aufnimmt, die zur Betätigung der Verriegelungseinrichtung erforderlich sind.

D.h., auf der Montageplatte 19 ist ein Elektromotor 29 angeordnet, ferner der Empfänger 32 der Fernsteuerung und eine Batterie 31 zur Energieversorgung des Elektromotors 29 und des Empfängers 32.

Der Elektromotor 29 weist ein nicht dargestelltes Untersetzungsgetriebe auf, an dessen in Figur 3 dargestellter Abtriebswelle 33 ein Exzenter 34 befestigt ist, der über eine Koppelstange 35 gelenkig mit dem Schenkel 24 der Klinke 22 verbunden ist.

Der Elektromotor 29 wird von dem Empfänger 32 der Fernsteuerung angesteuert.

Durch Drehung der Abtriebswelle 33 in Richtung des Pfeils 36 wird damit die Klinke 22 aus der Rastausnehmung 27 gezogen, wodurch der Verriegelungsbolzen 17 durch die Kraft der Druckfeder 28 aus der Rastausnehmung 18 in dem Einhängekörper 8 gezogen wird, so dass der Einhängekörper 8 in die in Figur 2 dargestellte Freigabeposition verschwenkt und damit das in dem Einhängekörper 8 eingehängte Seilende 6 mit dem Knopf 7 gelöst wird.

Zum Eingriff in die Rastausnehmung 18 in dem Einhängekörper 8 wird der Verriegelungsbolzen 17 manuell nach unten gedrückt, wodurch der Einhängekörper 8 wieder seine Schließposition einnimmt, um mit der Vorrichtung erneut einen Baumstamm aufhängen zu können.

Dazu ist gemäß Figur 1 in dem oberen Gelenkkopfteil 1 in einer Ausnehmung 37 ein Bolzen 38 verschiebbar geführt, der an dem oberen Ende des Verriegelungsbolzens 17 angreift, um ihn nach unten in die Rastausnehmung 18 zu drücken.

Die hülsenförmige Führung 21 mit dem Verriegelungsbolzen 17 ist in Längsrichtung des Verriegelungsbolzens 17 verschiebbar geführt und in die Verriegelungsstellung des Verriegelungsbolzens 17 federbelastet. Dazu ist gemäß Figur 1 und 2 auf der Montageplatte 19 ein Bolzen 39 zur Führung der Hülse 21 befestigt. Die Hülse 21 weist dazu eine Lasche 40 auf, die von der Führungsstange 39 durchsetzt wird. Eine Druckfeder 42 stützt sich einerseits an der Lasche 40 und andererseits am oberen Ende einer Halterung 41 ab, die auf der Montageplatte 19 befestigt ist. Durch diese verschiebbare Führung der Hülse 21 mit dem Verriegelungsbolzen 17 kann der Einhängekörper 8 auch dann in seine Schließposition gemäß Figur 1 und 2 geschwenkt werden, wenn versehentlich durch Betätigung des Bolzens 38 der Verriegelungsbolzen 17 in seine untere Position gedrückt worden ist, in der er durch die Klinke 22 arretiert ist.

Um die Batterie 31 zu schonen, ist gemäß Figur 3 ein Schalter 44 vorgesehen, mit dem der Empfänger 32 ausgeschaltet wird, wenn der Verriegelungsbolzen 17 entriegelt worden ist, also die Laufkatze vom Tal zum Berg transportiert wird. Der Schalter 44 wird durch einen um eine Achse 45 verschwenkbaren Hebel 46 gebildet, der zum Ausschalten des Schalters von der Klinke 22 betätigt wird, wenn diese mit dem Exzenter 34 und der Koppelstange 35 entsprechend dem Pfeil 47 verschwenkt wird, so dass der Finger 26 aus der Rastausnehmung 27 und damit der Verriegelungsbolzen 17 aus der Ausnehmung 18 gezogen wird.

Bei der Vorrichtung nach Figur 4 wird als Zugmittel anstelle eines Seiles eine Rundschlinge 50, also ein endloses Band verwendet.

Dazu ist an dem oberen Gelenkkopfteil 1 oder dem unteren Gelenkkopfteil 3 auf beiden Seiten jeweils eine Gleitöse 51, 52 befestigt, durch die die Rundschlinge 50 geführt ist. Am oberen Ende der Rundschlinge 50 ist der Haken 53 beispielsweise eines Kranes eingehängt. Am unteren Ende 56 ist mit einem Schäkel 54 ein Knopf 55 befestigt. Der Knopf 55 wird in den Einhängekörper 8 in gleicher Weise eingehängt, wie der Knopf 7 nach Figur 1.

Die Rundschlinge 50, die beispielsweise aus Textilmaterial besteht, wird vor allem dort verwendet, wo ein Stahlseil zu einer Beschädigung führen kann, weil es einschneidet, beispielsweise bei Balken, Leimbindern oder dergleichen, z.B. bei Zimmererarbeiten oder im Holzbau, oder z.B. dort, wo ein Stahlseil rutscht, z.B. bei einem Eisenträger.

Die Ösen 51, 52 sind gemäß Figur 4 durch zwei Bügel gebildet, die an einem Ring 57 befestigt sind, der am oberen Gelenkkopfteil 1 befestigt ist, beispielsweise mit einem nicht dargestellten Bolzen, der durch die Öse 2 gemäß Figur 1 am oberen Gelenkkopfteil 1 gesteckt ist.

Das manuelle Zusammendrücken der Feder 28 mit dem Bolzen 38 erfordert eine relativ große Kraft.

Wie in Figur 1 bis 3 gestrichelt dargestellt, kann zum Eingriff des Verriegelungsbolzens 17 in die Rastausnehmung 18 daher statt des Bolzens 38 eine (gestrichelt dargestellte) Stange 60 vorgesehen sein. Die Stange 60 kann direkt an den Verriegelungsbolzen 17 angelenkt sein. Vorzugsweise ist sie jedoch mittelbar an dem Verriegelungsbolzen 17 angelenkt. Dazu ist sie einerseits bei 61 an der Klinke 22 zwischen den Schenkeln 23 und 24 angelenkt ist, und andererseits exzentrisch bei 62 an dem Einhängekörper 8. Damit wird der Verriegelungsbolzen 17 in die Rastausnehmung 18 geschoben, wenn der Einhängekörper 8 von der nach unten verschwenkten Freigabeposition gemäß Figur 2 in die Schließposition gemäß Figur 1 und 3 geschwenkt wird. Wie in Figur 1 und 3 dargestellt, verläuft die Stange 60 vorzugsweise geschützt in der einen Wange 15 des unteren gabelförmigen Gelenkkopfteils 3. In Figur 3 ist das untere Gelenkkopfteil 3 gekrümmt dargestellt. Das untere Gelenkkopfteil kann jedoch auch zylindrisch ausgebildet sein.

## Patentansprüche

1. Vorrichtung zum Aufhängen eines Stammes oder dergleichen länglichen Gegenstandes mit einem Zugmittel, insbesondere an einem Seilbahnkran, mit einem Gelenkkopf (1, 3), an dem ein Einhängekörper (8), der eine Längsöffnung (9) zum Einhängen eines Knopfes (7; 55) an einem Ende (6; 56) des Zugmittels aufweist, zwischen einer Schließposition im Gelenkkopf (1, 3) und einer aus dem Gelenkkopf (1, 3) geschwenkten Freigabeposition für das Zugmittelende (6; 56) mit dem Knopf (7; 55) um eine Schwenkachse (16) verschwenkbar angelenkt ist, mit wenigstens einer Gleitöse (2; 51, 52) an dem Gelenkkopf (1, 3), durch die das Zugmittel gleitend geführt ist, um eine sich um den hängenden Stamm zusammenziehende Schlinge zu bilden, mit einer Verriegelungseinrichtung zur Verriegelung des Einhängekörpers (8) in der Schließposition und mit einer Fernsteuerung für einen Aktuator zur Betätigung der Verriegelungseinrichtung, **dadurch gekennzeichnet, dass** die Längsöffnung (9) des Einhängekörpers eine Erweiterung (11) an ihrem von der Schwenkachse (16) abgewandten Ende zum Ein- und Aushängen des Zugmittelendes (6; 56) mit dem Knopf (7; 55) in der Schließposition aufweist und unterhalb der Erweiterung (11) eine Auflage (12) für den nach unten gezogenen, eingehängten Knopf (7; 55) vorgesehen ist, die Verriegelungseinrichtung einen Verriegelungsbolzen (17) aufweist, der in eine Rastausnehmung (18) an dem von der Schwenkachse (16) abgewandten Ende des Einhängekörpers (8) eingreift, und der Verriegelungsbolzen (17) in die Entriegelungsstellung federbelastet und in der Verriegelungsstellung durch eine Klinke (22) arretierbar ist, an der der Aktuator angreift.

2. Vorrichtung nach Anspruch 1, **dadurch gekennzeichnet, dass** der Gelenkkopf aus wenigstens zwei miteinander verbindbaren Gelenkkopfteilen (1, 3) besteht, wobei der Einhängekörper (8) an dem einen Gelenkkopfteil (3) angelenkt und die Gleitöse (2) an dem anderen Gelenkkopfteil (1) befestigt ist.

3. Vorrichtung nach Anspruch 1, **dadurch gekennzeichnet, dass** die Klinke (22) mit einem Ende am Verriegelungsbolzen (17) angelenkt ist und mit ihrem anderen Ende in der Verriegelungsstellung des Verriegelungsbolzens (17) in eine Rastausnehmung (27) eingreift.

4. Vorrichtung nach Anspruch 3, **dadurch gekennzeichnet, dass** die Klinke (22) in Eingriffsstellung in die Rausausnehmung (27) federbelastet ist.

5. Vorrichtung nach Anspruch 1 und 4, **dadurch gekennzeichnet, dass** zur Federbelastung des Verriegelungsbolzens (17) und zur Federbelastung der Klinke (22) eine Druckfeder (28) vorgesehen ist, die sich einerseits an dem am Verriegelungsbolzen (17) angelenkten Ende der Klinke (22) und andererseits an der Führung (21) abstützt.

6. Vorrichtung nach einem der voranstehenden Ansprüche, **dadurch gekennzeichnet, dass** der Aktuator zum Herausziehen der Klinke (22) aus der Rastausnehmung (27) ausgebildet ist.

7. Vorrichtung nach einem der voranstehenden Ansprüche, **dadurch gekennzeichnet, dass** eine manuelle Betätigung zum Eingriff des Verriegelungsbolzens (17) in die Rastausnehmung (18) in dem Einhängekörper (8) vorgesehen ist.

8. Vorrichtung nach Anspruch 7, **dadurch gekennzeichnet, dass** zum Eingriff des Verriegelungsbolzens (17) in die Rastausnehmung (18) eine Stange (60) vorgesehen ist, die mit einem Ende an dem Verriegelungsbolzen (17) oder der Klinke (22) und mit dem anderen Ende exzentrisch an dem Einhängekörper (8) angelenkt ist.

9. Vorrichtung nach Anspruch 8, **dadurch gekennzeichnet, dass** der Verriegelungsbolzen (17) in einer Führung (21) verschiebbar geführt ist und die Führung (21) ihrerseits in Längsrichtung des Verriegelungsbolzens (17) verschiebbar geführt und in Verriegelungsstellung des Verriegelungsbolzens (17) federbelastet ist.

10. Vorrichtung nach einem der voranstehenden Ansprüche, **dadurch gekennzeichnet, dass** ein Schalter (44) vorgesehen ist, der den Empfänger (32) der Fernsteuerung ausschaltet, wenn der Verriegelungsbolzen (17) entriegelt ist.

## Claims

1. An apparatus for suspending a log or similar elongate object with a traction means, in particular on a cableway crane, having a swivel head (1, 3) on which a hitching body (8) having a longitudinal opening (9) for hitching a knob (7; 55) at one end (6; 56) of the traction means is pivoted around a swivel pin (16) between a closed position in the swivel head (1, 3) and a release position swiveled out of the swivel head (1, 3), for the traction means end (6; 56) with the knob (7; 55), having on the swivel head (1, 3) at least one sliding eye (2; 51, 52) through which the traction means is guided slidingly to form a loop tightening around the hanging log, having a locking device for locking the hitching body (8) in the closed position, and having a remote control for an actuator for actuating the locking device, **characterized in that** the longitudinal opening (9) of the hitching body has an enlargement (11) at its end facing away from the swivel pin (16) for hitching and unhitching the traction means end (6; 56) with the knob (7; 55) in the closed position, and a support (12) for the downward pulled hitched knob (7; 55) is provided below the enlargement (11), the locking device has a locking bolt (17) which engages a notch (18) at the end of the hitching body (8) facing away from the swivel pin (16), and the locking bolt (17) is spring-loaded into the unlocking position and adapted to be stopped in the locking position by a catch (22) which the actuator attacks.

2. The apparatus according to claim 1, **characterized in that** the swivel head comprises at least two interconnectable swivel head portions (1, 3), the hitching body (8) being linked to the one swivel head portion (3), and the sliding eye (2) fastened to the other swivel head portion (1).

3. The apparatus according to claim 1, **characterized in that** the catch (22) is linked at one end to the locking bolt (17) and engages at its other end a notch (27) in the locking position of the locking bolt (17).

4. The apparatus according to claim 3, **characterized in that** the catch (22) is spring-loaded into the notch (27) in the engaged position.

5. The apparatus according to claims 1 and 4, **characterized in that** for spring-loading the locking bolt (17) and for spring-loading the catch (22) a compression spring (28) is provided which is supported on the end of the catch (22) linked to the locking bolt (17), on the one hand, and on the guide (21), on the other hand.

6. The apparatus according to any of the preceding claims, **characterized in that** the actuator is formed to draw the catch (22) out of the notch (27).

7. The apparatus according to any of the preceding claims, **characterized in that** a manual actuation is provided for engagement of the locking bolt (17) into the notch (18) in the hitching body (8).

8. The apparatus according to claim 7, **characterized in that** for engagement of the locking bolt (17) into the notch (18), a rod (60) is provided which is linked at one end to the locking bolt (17) or the catch (22) and at the other end eccentrically to the hitching body (8).

9. The apparatus according to claim 8, **characterized in that** the locking bolt (17) is guided displaceably in a guide (21), and the guide (21) is in turn guided displaceably in the longitudinal direction of the locking bolt (17) and spring-loaded in the locking position of the locking bolt (17).

10. The apparatus according to any of the preceding claims, **characterized in that** a switch (44) is provided which switches off the receiver (32) of the remote control when the locking bolt (17) is unlocked.

## Revendications

1. Dispositif pour suspendre un tronc d'arbre ou un objet allongé similaire avec un moyen de traction, en particulier avec une grue de téléphérique, comportant une tête articulée (1, 3) sur laquelle un corps suspendu (8), qui présente une ouverture longitudinale (9) pour accrocher un bouton (7 ; 55) à une extrémité (6 ; 56) du moyen de traction, est articulé de manière à pivoter autour d'un axe de pivotement (16) entre une position de fermeture dans la tête articulée (1, 3) et une position de libération, pivotée hors de la tête articulée (1, 3), pour l'extrémité (6 ; 56) du moyen de traction présentant le bouton (7 ; 55), comportant au moins un oeillet de coulissement (2 ; 51, 52) sur la tête articulée (1, 3), à travers lequel le moyen de traction est guidé coulissant pour former une boucle qui se resserre autour du tronc d'arbre à suspendre, comportant un dispositif de verrouillage pour verrouiller le corps suspendu (8) dans la position de fermeture et comportant une télécommande pour un actionneur destiné à actionner le dispositif de verrouillage, **caractérisé en ce que** l'ouverture longitudinale (9) du corps suspendu présente un élargissement (11) au niveau de son extrémité détournée de l'axe de pivotement (16) pour accrocher et décrocher l'extrémité (6 ; 56) du moyen de traction avec la tête (7 ; 55) dans la position de fermeture, et en dessous de l'élargissement (11) est prévu un appui (12) pour le bouton (7 ; 55) accroché, tiré vers le bas, **en ce que** le dispositif de verrouillage présente un boulon de verrouillage (17) qui s'engage dans un évidement d'enclenchement (18) sur l'extrémité du corps suspendu (8), qui est détournée de l'axe de pivotement (16), et **en ce que** le boulon de verrouillage (17) peut être sollicité par ressort jusque dans la position de déverrouillage et bloqué dans la position de verrouillage par un cliquet (22) sur lequel est appliqué l'actionneur.

2. Dispositif selon la revendication 1, **caractérisé en ce que** la tête articulée est constituée par au moins deux parties de tête articulée (1, 3) susceptibles d'être reliées l'une à l'autre, le corps de suspension (8) étant articulé sur une des parties de tête articulée (3), et l'oeillet coulissant (2) étant fixé sur l'autre partie de tête articulée (1).

3. Dispositif selon la revendication 1, **caractérisé en ce que** le cliquet (22) est articulé par une extrémité sur le boulon de verrouillage (17) et s'engage par son autre extrémité dans un évidement d'enclenchement (27), dans la position de verrouillage du boulon de verrouillage (17).

4. Dispositif selon la revendication 3, **caractérisé en ce que** dans la position d'engagement, le cliquet (22) est sollicité par ressort dans l'évidement d'enclenchement (27).

5. Dispositif selon la revendication 1 et 4, **caractérisé en ce que** pour solliciter par ressort le boulon de verrouillage (17) et pour solliciter par ressort le cliquet (22) est prévu un ressort de compression (27) qui prend appui d'une part sur l'extrémité du cliquet (22), qui est articulée sur le boulon de verrouillage (17), et d'autre part sur le guidage (21).

6. Dispositif selon l'une quelconque des revendications précédentes, **caractérisé en ce que** l'actionneur est réalisé pour extraire le cliquet (22) hors de l'évidement d'enclenchement (27).

7. Dispositif selon l'une quelconque des revendications précédentes, **caractérisé en ce qu'**un actionnement manuel est prévu dans le corps de suspension (8) pour l'engagement du boulon de verrouillage (17) dans l'évidement d'enclenchement (18).

8. Dispositif selon la revendication 7, **caractérisé en ce que** pour l'engagement du boulon de verrouillage (17) dans l'évidement d'enclenchement (18) est prévue une tige (60) qui est articulée par une extrémité sur le boulon de verrouillage (17) ou sur le cliquet (22) et qui, par l'autre extrémité, est articulée de manière excentrique sur le corps de suspension (8).

9. Dispositif selon la revendication 8, **caractérisé en ce que** le boulon de verrouillage (17) est guidé en translation dans un guidage (21), et **en ce que** le guidage (21) est lui-même guidé en translation en direction longitudinale du boulon de verrouillage (17) et sollicité par ressort jusque dans la position de verrouillage du boulon de verrouillage (17).

10. Dispositif selon l'une quelconque des revendications précédentes, **caractérisé en ce qu'**il est prévu un commutateur (44) qui met hors circuit le récepteur (32) de la télécommande lorsque le boulon de verrouillage (17) est déverrouillé.
